(19) Europäisches Patentamt
European Patent Office
Office européen des brevets

(11) **EP 3 660 494 A1**

(12) **EUROPEAN PATENT APPLICATION**

(43) Date of publication:
**03.06.2020 Bulletin 2020/23**

(51) Int Cl.:
**G01N 22/00** (2006.01) **F25B 49/00** (2006.01)
**G01R 27/26** (2006.01)

(21) Application number: **18209029.0**

(22) Date of filing: **29.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Danfoss A/S**
**6430 Nordborg (DK)**

(72) Inventor: **VESTERGAARD, Niels P.**
**6430 Nordborg (DK)**

(74) Representative: **Petersen, Frank**
**Danfoss A/S**
**Nordborgvej 81**
**6430 Nordborg (DK)**

(54) **SENSING OF A VAPOR QUALITY**

(57) The invention relates to a method and device for providing a sensor signal (S) indicative of a vapor quality (X) of a medium flowing within a conduit (60). An electromagnetic wave emitter and receiver 50 is coupled to an electromagnetic wave guide 48 arranged within the conduit 60. A wave reflector 52 is arranged to reflect the electromagnetic wave from the emitter to be received by the receiver. Timing means measure a travel time T of an electro-magnetic wave along the wave guide 48. Processing means determine a sensor signal S based on the measured travel time T and a known distance L of the reflector 52 from the emitter and receiver 50 along the wave guide 48.

The invention further relates to a cooling system 10, 110 and an operating method therefor. The cooling system 10, 110 includes at least one evaporator 32 for evaporating an ammonia refrigerant, at least one compressor 12 arranged to compress the evaporated refrigerant, and at least one condenser 18 for condensing the compressed refrigerant. A sensor signal S indicative of a vapor quality X of the refrigerant in a conduit 38a between at least a portion of the evaporator 32 and the compressor 12 is obtained from the described sensor and method.

Fig. 5

EP 3 660 494 A1

## Description

The invention relates to a device and a method for providing a sensor signal indicative of a vapor quality of a medium flowing within a conduit, to a cooling system including such a device, and to a method of operating a cooling system.

In a saturated vapor/liquid two-phase flow of a medium, the vapor quality is a value representing the mass fraction of the medium that is vapor. If the flow consists of only saturated vapor, the vapor quality value is 100 %. If the flow consists of only saturated liquid, the vapor quality value is 0%.

For many applications, in particular for control of a cooling system, it can be advantageous to obtain a measurement value that is at least to some degree indicative of the vapor quality of a medium flowing through a conduit.

US 5,729,123 describes a relative volume fraction probe for use in a multiphase fluid system. The probe includes two parallel conductors. A generating unit generates time varying electrical signals inserted into the first conductor. A time domain reflectometer receives a signal returned by the second conductor and outputs a curve of impedance vs. distance. An analysis unit calculates the area under the curve, subtracts the calculated area from an area produced when the sample zone consists entirely of fluid, and divides the difference by the difference between an area produced when the sample zone consists entirely of material of a first fluid phase and an area produced when the sample zone consists entirely of the second fluid phase, yielding the volume fraction.

It may be considered an object to propose a device and method for providing a sensor signal indicative of a vapor quality, as well as a cooling system and a method of operating such a cooling system which are well suited to obtain information about the mass fraction of different phase components in a vapor/liquid mixture flowing within a conduit.

This object is addressed by a device according to claim 1, a cooling system according to claim 8, a method according to claim 13, and an operating method according to claim 14. Dependent claims refer to preferred embodiments of the invention.

The device according to the invention provides a sensor signal indicative of a vapor quality of a medium flowing within a conduit. The vapor quality X is the mass fraction of vapor in a saturated vapor/liquid phase mixture; saturated vapor has a vapor quality value X of 100 % and saturated liquid has a vapor quality value X of 0%. It should be noted that the terms "vapor" and "gas" are used herein interchangeably to both designate the medium in its gaseous state.

The sensor signal is indicative of the vapor quality, which should be understood such that an information about the vapor quality value may be gained from the sensor signal. This may include that the vapor quality value X may be calculated or otherwise deducted based on the sensor signal S, as well as possibly further factors. However, it may be sufficient for the sensor signal being indicative of the vapor quality if there is a determinable dependency of the sensor signal on the vapor quality value X, or vice versa. For example, the sensor signal may indicate a change amount and/or change direction of the vapor quality value X, i.e. if it increases or decreases. Preferably, the sensor signal may have a strictly monotonous dependency on the vapor quality X. As will become apparent in connection with preferred embodiments, it may not be necessary to actually obtain specific vapor quality values from the sensor signal to deduct information about the medium, or to effect control based on the state of the medium.

The device comprises an electromagnetic wave emitter and receiver. The emitter is suited to generate an electromagnetic wave, preferably in the microwave frequency range of 1.5 to 26 GHz. The emitter is coupled to an electromagnetic wave guide such that the electromagnetic wave may be conducted by the wave guide. The wave guide may preferably be an antenna along which the electromagnetic wave may propagate. The wave guide is at least partly arranged within the conduit, i.e. in contact with the medium therein. While the wave guide may be separated from the medium e.g. by an insulation, the electromagnetic wave propagating along the wave guide will be influenced by the properties of the medium. The wave guide may traverse the inner space of the conduit at least over a certain length. It may preferably be arranged at a distance from a conduit wall.

A wave reflector is arranged to reflect the electromagnetic wave, such that it may be received by the receiver. The receiver is disposed to receive the electromagnetic wave after propagation along the wave guide and reflection at the reflector. Preferably, the emitter and receiver may be arranged closely together and/or form a common assembly. This facilitates synchronization.

Timing means are provided to measure a travel time of the electromagnetic wave on its path from the emitter to the receiver. Processing means are provided to determine a sensor signal based on the measured travel time and a known distance of the reflector from the emitter and receiver along the wave guide.

As will be shown below in more detail, the propagation speed of the electromagnetic wave propagating along the wave guide through the medium is dependent, besides other factors, on the phase of the medium. In view of the known travel distance, the speed of the wave from emitter to receiver is measurable by the timing means. Thus, the speed (or a measured travel time) is indicative of the vapor quality value X of the medium along the wave path.

Therefore, a sensor signal generated based on the measured travel time or on a value derived therefrom, such as the propagation speed, may be used to convey information about the vapor quality of the medium.

Preferably, at least a portion of the conduit, preferably the entire conduit through which the wave guide extends, may be arranged at least substantially vertically. As will be explained, the flow in a vertical conduit is more homogenous leading to more reliable measuring results.

In a preferred embodiment, the wave reflector may comprise at least a first reflector portion arranged near a center of the conduit. This may ensure that the medium properties are measured at a distance from the conduit wall, rather than in contact therewith, which could lead to undesirable influences. In order to allow a continued flow, a flow opening is preferably arranged between a wall of the conduit and the first reflector portion. The flow opening may preferably be ring shaped to surround the first reflector portion. Further preferably the wave reflector may comprise a second reflector portion arranged adjacent to a wall of the conduit. First and second reflector portions may thus be spaced by the flow opening. Further, one or more holders may extend between the first and second reflector portions to ensure stable positioning.

In a preferred embodiment, a flow modification element maybe provided to change the flow of the medium along the conduit. As will be explained, liquid and gas (vapor) may be distributed in different ways within the conduit. The medium may flow in accordance with different flow regimes, dependent on parameters such as e.g. the flow speed and the vapor quality. To obtain a sensor signal with less dependence on the distribution and/or flow regime, the flow modification element may modify the flow, e.g. by directing it. In particular, the flow modification element may be disposed to direct fluid flowing along a wall of the conduit towards a center portion. In an annular flow regime, a portion of the liquid medium will flow along the wall. In this case directing at least a portion thereof towards the center, e.g. by an inclined surface, may help to obtain a sensor signal showing less dependency on the flow regime.

In one embodiment, the conduit may comprise a Venturi portion, i.e. a portion shaped as a venture duct, such that in the flow direction the flow channel first narrows and then expands. This may help to improve the sensor signal by increasing the flow velocity.

The device and method according to the invention delivering a sensor signal indicative of the vapor quality may be used e.g. in a cooling system, in particular with ammonia as refrigerant. The cooling system may comprise at least one evaporator for evaporating the ammonia refrigerant, at least one compressor to compress the ammonia refrigerant, and at least one condenser for condensing the compressed refrigerant. The described device for providing a sensor signal indicative of the vapor quality may be arranged at a conduit between at least a portion of the evaporator and the compressor. The term "at least a portion" includes that the device may be mounted e.g. within the evaporator, such as on a portion of an evaporator tube. Alternatively, the device may be arranged at a return line conducting at least partly evaporated refrigerant away from the evaporator.

By using the sensor device and method on ammonia refrigerant after it has traversed at least a part of the evaporator allows to gather information about operation of the cooling system.

In particular, the sensor signal may be used for controlling elements of the cooling system. In one embodiment, the cooling system may comprise a controllable evaporator inlet valve connected to an inlet of the evaporator. The degree of opening of the evaporator inlet valve may be controllable to control the flow of refrigerant through the valve, which may be e.g. a motor controlled valve or a solenoid valve. Controller means maybe provided, disposed to control the evaporator inlet valve depending on the sensor signal.

As will be explained in more detail below, controlling an ammonia cooling system based on the sensor signal, and in particular controlling the evaporator inlet valve in this way, may allow optimized operation, which can help to reduce the amount of ammonia refrigerant and/or to improve efficiency.

It is particularly preferred to provide the controller configured to reduce an opening of the evaporator inlet valve in response to a sensor signal indicative of a reducing (e.g. lower) vapor quality value, and to increase an opening of the evaporator inlet valve in response to a sensor signal indicative of a rising (e.g. higher) vapor quality value. Control may be based e.g. on an operating point with a reference setting of the evaporator inlet valve opening and/or a reference sensor signal level. If the sensor signal deviates from the reference sensor signal, the inlet valve opening maybe adjusted in accordance with the control strategy. The controller may employ any suitable control strategy, such as e.g. proportional control, integral control, and/or derivative control. Preferred may be a PID controller.

The cooling system may be of any type. In particular, the cooling system may e.g. be a pump overfeed system or a direct expansion system.

In a pump overfeed system, the evaporator is operated such that the refrigerant is evaporated only partly, i.e. the refrigerant in a return conduit still has a substantial amount of liquid. The vapor quality determined by the device will thus be below 100%, preferably 95% or lower, further preferred 90% or lower, particularly preferred 85% or lower. A circulation rate, defined as the ratio of the mass flow of refrigerant supplied to an evaporator and the design capacity of the evaporator, will be above 1.

A pump overfeed system may comprise an accumulator for the refrigerant in liquid phase. An evaporator pump is preferably provided for pumping liquid refrigerant to the evaporator. The controller may be configured to control the evaporator inlet valve to obtain the above mentioned vapor quality values.

In a direct expansion cooling system, the refrigerant is fully (or almost fully) evaporated in the evaporator(s), i.e. the refrigerant in a return conduit is gas (vapor) with at most a minimum of liquid refrigerant, e.g. as droplets. The vapor quality in a return conduit from the evaporator will thus be 95% or higher. A circulation rate will be below 1.

For a direct expansion cooling system, the controller is preferably being configured to control the evaporator inlet valve to obtain a vapor quality value of 95% or more.

Embodiments of the invention will be described with reference to the drawings, in which

Fig. 1      shows a schematic representation of a first embodiment of a cooling system which is a pump over-feed cooling system;

Fig. 2a      shows a schematic representation of a longitudinal sectional view of the flow of a medium through a vertical portion of a conduit of the cooling system of figure 1;

Fig. 2b, 2c      show in schematic representation a longitudinal section and a cross-section of a flow of a medium through a horizontal portion of a conduit;

Fig. 3      a diagram showing a dependence of a dielectric constant on a vapor quality value;

Fig. 4      a side view of a first embodiment of a sensor attached to a conduit;

Fig. 5      a longitudinal sectional view of the sensor of figure 4;

Fig. 6      a cross-section along A..A in figure 4 of the sensor of figure 4, 5;

Fig. 7      an enlarged portion of the longitudinal sectional view of figure 5;

Fig. 8      a schematic representation of a flow of a medium through the portion of the sensor shown in figure 7;

Fig. 9      a diagram showing a dependence of a sensor signal on a vapor quality value for the sensor of Fig. 4-8;

Fig. 10      a diagram showing the dependence of a sensor signal and an evaporator capacity on a circulating rate;

Fig. 11      a longitudinal sectional view through a second embodiment of a sensor;

Fig. 12      a schematic representation of a second embodiment of a cooling system which is a direct expansion cooling system;

Fig. 13      a diagram showing a dependence of a sensor signal on the vapor quality value for the system of Fig. 12;

Fig. 14      a simplified pressure enthalpy diagram for an ammonia refrigerant.

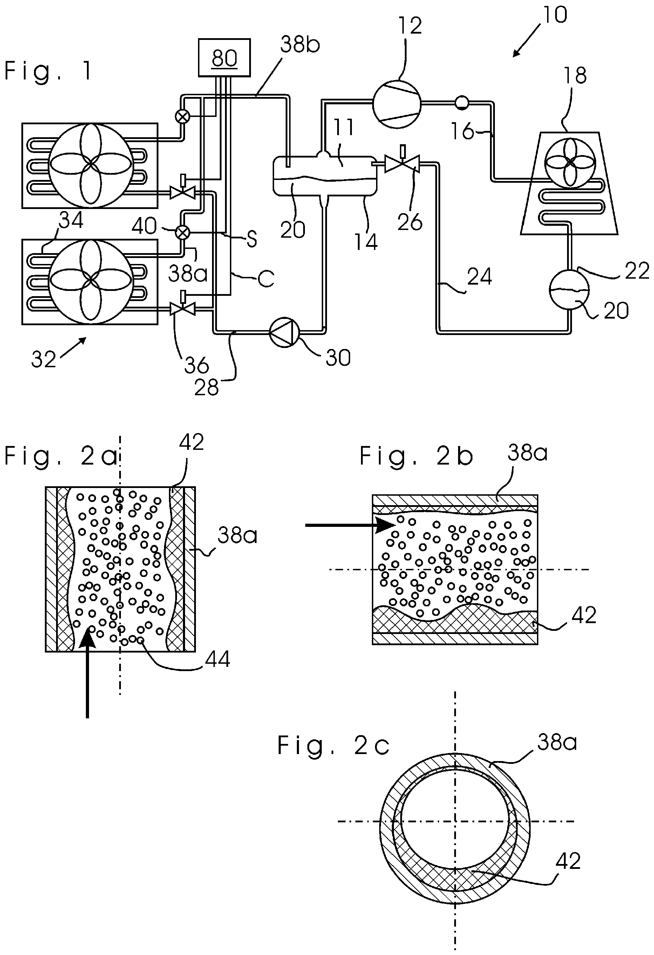

Figure 1 shows a first embodiment of a cooling system 10.

The cooling system 10 is a pump over-feed cooling system operated with ammonia as refrigerant.

The cooling system 10 comprises a compressor 12 to compress ammonia gas (vapor) 11 contained in the upper portion of a receiver 14 filled with both gaseous ammonia 11 and liquid ammonia 20. The compressed ammonia gas 11 is supplied through a conduit 16 to a condenser 18, where it condenses at least partly to collect as liquid ammonia 20 in a collector 22. The liquid ammonia 20 is supplied through a conduit 24 to the receiver 14 through an expansion valve 26.

The liquid ammonia 20 from the lower part of the receiver is pumped by a pump 30 through a conduit 28 to evaporators 32.

In the example shown, the cooling system 10 comprises two identical evaporators 32 connected in parallel. The skilled person will recognize that different embodiments of the cooling system 10 may comprise a different number of evaporators 32, such as only one or more than two evaporators. In the following, only one of the evaporators 32 connected in parallel will be described.

The liquid ammonia 20 is supplied through a controllable evaporator inlet valve 36 to an evaporator tube 34 within the evaporator 32. Within the evaporator 32, the ammonia flowing through the evaporator tube 34 is partly evaporated. The resulting mixture of ammonia gas and liquid ammonia is guided through a first return conduit portion 38a and a common second return conduit portion 38b back into the receiver 14, where it separates into ammonia gas 11 in the upper portion of the receiver 14 and liquid ammonia 20 in the lower portion of the receiver 14.

For a cooling system 10 with multiple evaporators 32, each evaporator 32 comprises a separate evaporator inlet valve 36 branching off from the conduit 28 from the pump 30 and a separate first return conduit portion 38a for the partly evaporated ammonia. The first return conduit portions 38a from the evaporators 32 merge at the common second return conduit portion 38b.

In each of the first return conduit portions 38a of each evaporator 32, a vapor quality sensor 40 is arranged to deliver a sensor signal S indicative of the vapor quality of the ammonia medium flowing through the first return conduit portion 38a.

In particular for a medium flowing through a conduit such as the return conduit 38a, the vapor quality X usually cannot be measured directly, as this would require a separation of gas and liquid to weigh the respective mass, which is not possible in a flowing medium. Moreover, the liquid phase portion and the gas phase portion may distribute differently within the conduit and may travel at different velocities.

The vapor quality value X is generally different from a void fraction, i.e. the volume fraction of the flow-channel volume that is occupied by the gas phase. While the void fraction is determined by the relative volume, the vapor quality value X is the thermal dynamic vapor quality based on mass fraction.

Depending e.g. on the flow speed and on the vapor quality, the flow of mixed liquid/gas ammonia through the return conduit 38a of the cooling system 10 may follow different flow regimes. Figure 2a schematically illustrates an annular flow in a vertically arranged portion of the return conduit 38a. A liquid film 42 flows on the conduit wall and a two-phase flow of ammonia liquid and gas flows near the center. As the thickness of the fluid film 42 will be equally distributed in a vertically oriented conduit 38a, it will appear as a circle in cross-section. An annular flow regime may be expected in the first return conduit 38a e.g. at a usual flow speed of 5 - 15 m/s.

In a horizontally arranged portion of the return conduit 38a as shown in figure 2b, 2c, the fluid film 42 will be thicker at the bottom due to the influence of gravity.

The sensor 40 provides a sensor signal S which is indicative of the vapor quality value X. As will be described in detail, the sensor 40 derives the signal S based on measurements conducted on propagation of an electromagnetic wave within the return conduit 38a.

The velocity of an electromagnetic wave is dependent on the properties of the medium in which it propagates. For vacuum, the speed is Co, i.e. the speed of light. For a given medium, the speed of propagation c can be calculated as

$$c = \frac{c_0}{\sqrt{\varepsilon_r \times \mu_r}}$$

wherein $\varepsilon_r$ is the relative permittivity or dielectric constant, and $\mu_r$ is the relative permeability. For non-magnetic gases, the relative permeability is $\mu_r = 1$.

Thus, the propagation speed c is directly dependent on the dielectric constant $\varepsilon_r$.

For a given medium, the dielectric constant $\varepsilon_r$ varies dependent on pressure, temperature and phase. As a consequence, the propagation speed c of an electromagnetic wave through a medium is dependent on the phase mixture, and therefore on the vapor quality value X. Thus, by determining the propagation speed c of an electromagnetic wave within the ammonia liquid/gas travelling through the conduit 38a, a sensor signal S indicative of the vapor quality value X may be obtained.

In assessing the dependency of the propagation speed c of an electromagnetic wave propagating through the gas/liquid mix of ammonia refrigerant flowing through the conduit 38a, the spatial distribution of the gas and liquid portions within the interior space of the conduit 38a have to be considered. Usually, the gas and liquid will not be homogenously distributed within the conduit 38a. In an annular flow regime as illustrated in figure 2a - 2c, the fluid film 42 along the conduit wall will form a liquid hold-up, however in the center portion of the conduit 38a there will still be a mixture of liquid and gaseous ammonia. The sensor 40 measures a propagation speed of an electromagnetic wave within the two-phase region 44 near the center. However, in interpreting the measured values, the liquid hold-up due to the annular flow regime is to be considered.

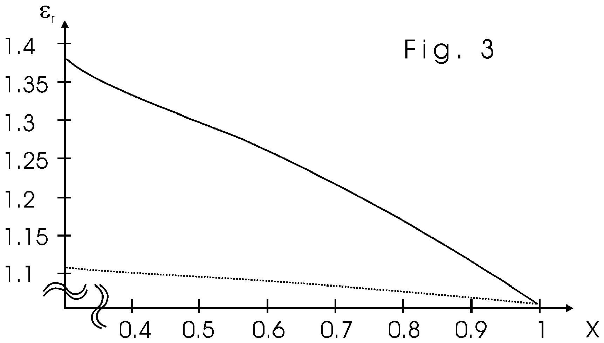

Figure 3 shows a diagram of the dependence of the dielectric constant $\varepsilon_r$ of the ammonia near the center of the conduit 38a for different values of the vapor quality value X. The dotted line shows the dependency for a homogenous distribution of gas and liquid throughout the interior volume of the conduit 38a, which shows only a small variation of the value for $\varepsilon_r$ in the shown range for the vapor quality X of 0.4 - 1. However, in an annular flow regime as illustrated in Fig. 2a-2c there is a liquid hold-up due to the liquid film 42 and the dielectric constant $\varepsilon_r$ has a stronger dependency on the vapor quality X. The solid curve of figure 3 shows the dielectric $\varepsilon_r$ decreasing from a value of about 1.35 at a vapor quality value X of 0.4 almost linearly down to a value of about 1.125 for a vapor quality value X of 0.9. It should be noted that the actual curve in the annular flow regime depends on further parameters, such as the flow speed and tube diameter.

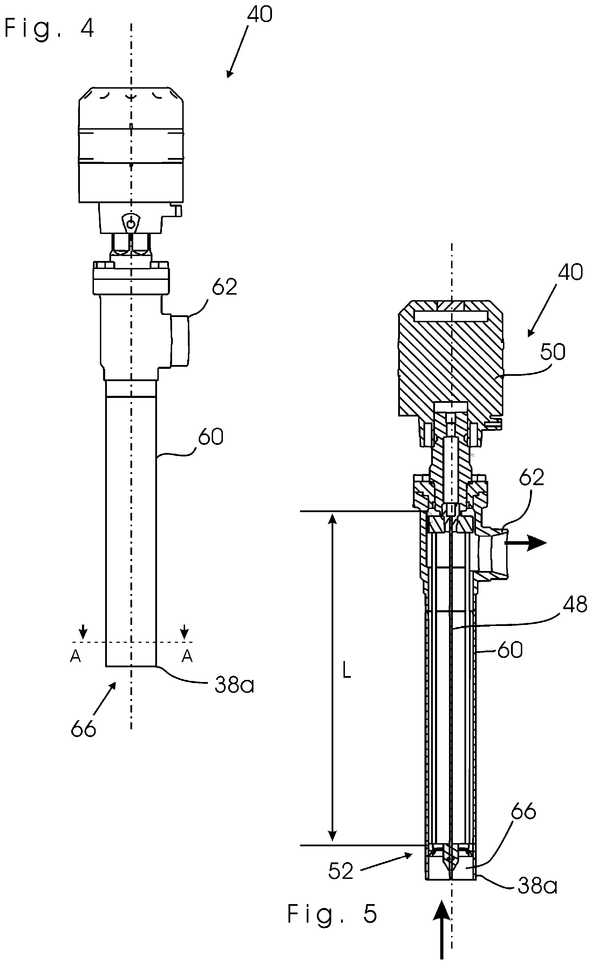

Figure 4-8 show a first embodiment of a sensor 40 attached to a vertical portion of the conduit 38a.

As visible in particular from the longitudinal sectional view of figure 5, the sensor 40 comprises a vertical tube portion 60 connected at an inlet 66 to the return conduit portion 38a and a second, horizontal outlet portion 62, such that the flow channel through the vertical portion 60 and the outlet portion 62 has an upside-down L-shape.

The actual measurement is conducted in the vertically arranged tube portion 60, which is preferred due to the more homogenous flow distribution therein. Within the vertical tube portion 60, a metal antenna 48 extends centrally in longitudinal direction. Connected to the antenna 48 is a transmitter and receiver unit 50 for generating and receiving an electromagnetic wave in the microwave spectrum, e.g. of a frequency of 1.5 to 26 GHz, travelling along the antenna 48. At the lower, distant end of the sensor 14 and the antenna 48, spaced from the transmitter and receiver unit 50 by a known distance L, a reflector 52 is arranged to reflect the electromagnetic wave.

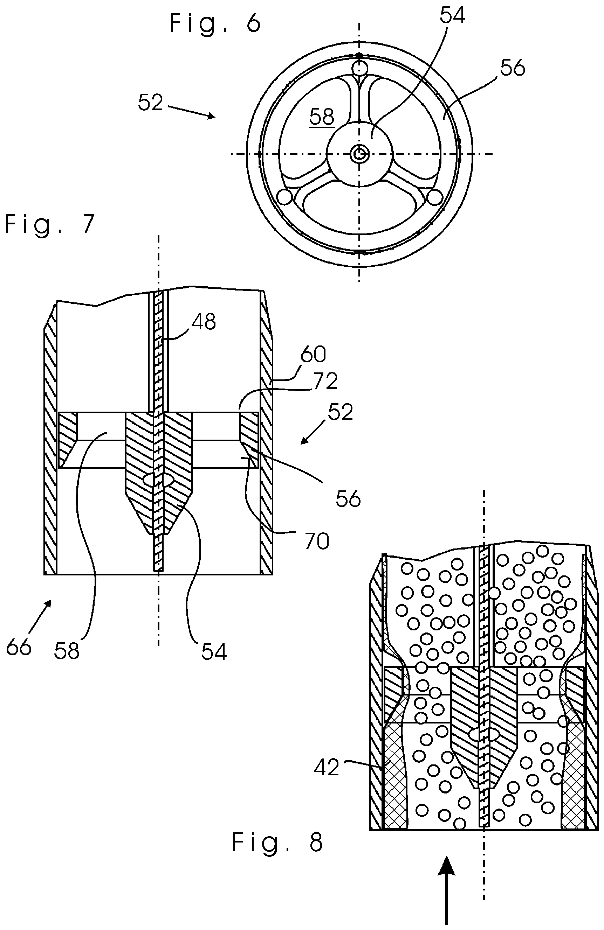

The lower end of the sensor 40 is shown in more detail in the enlarged sectional views of figure 6, figure 7. Within the vertical tube section 60, the reflector 52 is arranged comprising a central reflector portion 54 and an annular outer reflector portion 56. Between the inner and outer portion 54, 56 of the reflector 52, a ring-shaped flow channel 58 remains, interrupted only by radially extending support elements which serve to retain the central position of the central portion 54 and the antenna 48 fixed therein.

The reflector 52 is made of metal, so that an electromagnetic wave in the microwave frequency range propagating along the antenna 48 is reflected at the reflector 52.

The reflector 52 has a shape chosen to obtain a more homogenous flow of the ammonia medium through the interior of the vertical tube portion 60. The outer reflector portion 56 has a conical portion with an inner surface 70 inclined towards the center. As illustrated in Fig. 8, the surface 70 conducts the liquid film 42 away from the wall of the vertical tube section 60. The outer reflector portion 56 further has an upper edge 72, from which a portion of the liquid film 42 is released (Fig. 8) towards the center of the vertical tube section 60. As a consequence, the flow in the vertical tube section 60 is homogenized as compared to the flow through the return conduit portion 38a.

The transmitter and receiver element 50 is operated to emit an electromagnetic wave in the microwave range, which travels along the antenna 48 over the distance L, is reflected at the reflector 52, and again travels along the antenna 48 over the distance L until it is received at the receiver of the transmitter and receiver element 50.

At the transmitter and receiver element 50, a travel time T of the electromagnetic wave is measured, such that the speed of propagation c of the radar wave may be calculated as

$$c = 2\,L\,/\,T.$$

While the electromagnetic wave travels along the antenna 48, significant portions thereof propagate within the medium contained within the vertical tube portion 45 of the sensor 40. The propagation velocity c of the wave is therefore dependent on the medium properties and in particular the dielectric constant $\varepsilon_r$ thereof, which has been shown above to be dependent on the vapor quality X.

Therefore, a sensor signal S derived from the travel time T of the electromagnetic wave over two times the distance L has a dependency on the vapor quality X which is strictly monotonous.

The sensor signal S may be provided differently, e.g. as a digital signal or as an analog electrical signal. In one preferred embodiment, the sensor signal S is a current signal, for example with a current in the range of 4 - 20 mA.

In the example, the sensor signal S is proportional to the propagation speed c observed by the sensor 40.

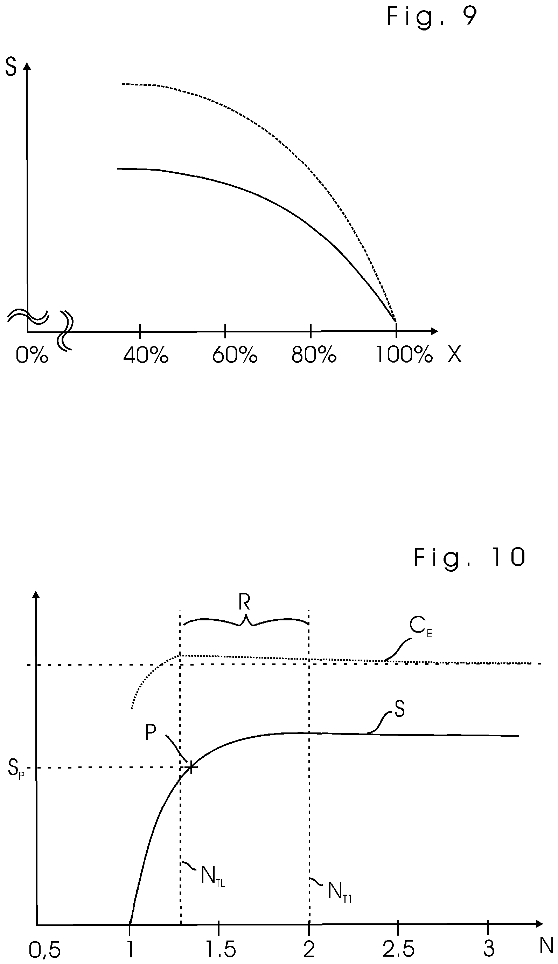

Figure 9 shows as an example the dependence of a sensor signal S generated in the sensor 40 in dependence of the vapor quality value X. Two curves are shown obtained at different flow speeds of the ammonia medium in the return conduit portion. The dotted line shows the sensor signal S for a low-flow speed of 5 m/s, whereas the solid line shows the sensor signal S for a flow speed of 10-15 m/s, which is a usual and expected range for the speed of the ammonia refrigerant in the conduit portion 38a of the cooling system 10 (Fig. 1).

The curves show a non-linear dependency of the sensor signal S on the vapor quality X. In particular for high vapor quality values X in the range of above 60 % there is a strong, strictly monotonous variation of the sensor signal S in dependence on the vapor quality X.

It should, however, be recognized that the sensor signal S is not necessarily identical to an exact measurement of a specific vapor quality value X. While for a given operating point of the cooling system 10 there is a strictly monotonous dependency as shown in Fig.9, the actual curve is also dependent on other factors, such as the distribution of liquid and gas within the conduit 38a. Thus, obtaining exact measurements of the vapor quality X from the sensor signal S may require additional information or assumptions, such as to the flow regime. However, as will be shown below, due to a monotonical dependency of the sensor signal S on the vapor quality X, the sensor signal S may nevertheless be used to observe operation and to effect control of the cooling system 10 based on the sensor signal S.

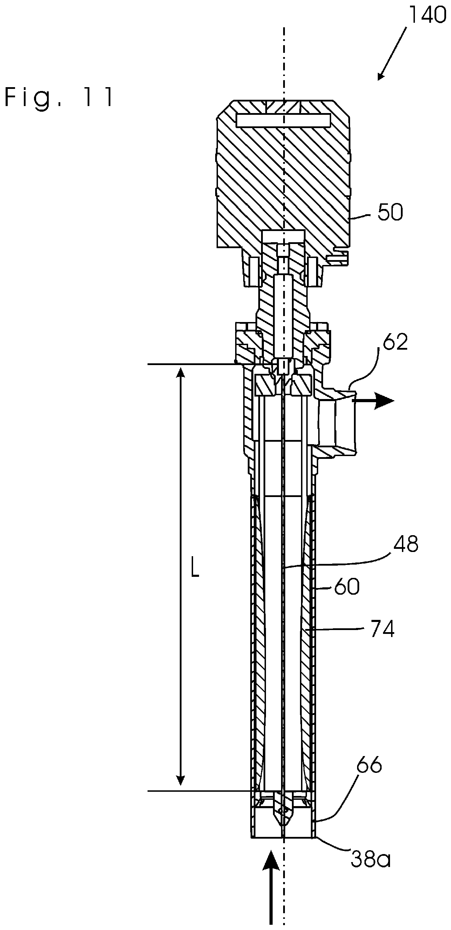

Fig. 11 shows a second embodiment of a sensor 140. The sensor 140 according to the second embodiment shares many common features with the sensor 40 according to the first embodiment. Like parts are designated by like reference numerals. In the following, only the differences will be further explained.

The sensor 140 according to the second embodiment comprises a venturi portion 74 within the vertical tube portion 60. The venture portion is shaped as a venturi nozzle, i.e. growing narrower in a first portion and then wider again in a second portion. The venturi portion 74 serves to increase the flow speed of the ammonia medium within the vertical tube portion 60, which further serves to homogenize to flow about the antenna 48 and may lead to better measurements in particular for low flow speeds.

In the ammonia cooling system 10 of Fig. 1, the sensor signals S from the vapor quality sensor 40 of each evaporator 32 are supplied to a controller 80. The controller 80 is a computer programmed to execute a control program to derive a control signal C from the sensor signal S. The control signal C is supplied to the control valve 36 of each evaporator 36 and controls the degree of opening of the control valves 36. The control valves 36 are for example solenoid valves controllable by control signals C.

The degree of opening of the control valves 36 determines the amount of liquid ammonia refrigerant supplied to each evaporator 32. A circulation rate N indicates the ratio of the mass flow of ammonia supplied to an evaporator 32 and the design capacity, or rated capacity, of the evaporator. For example, at a circulation rate of N=i, the evaporator 32 will fully evaporate the ammonia refrigerant to achieve a vapor quality value X=100%, but without superheating the refrigerant. At a circulation rate of N=2, half of the refrigerant will be evaporated, such that the vapor quality value will be X=50%.

In pump overfeed systems such as the cooling system 10 shown in Fig. 1, the circulation rate N is above 1, i.e. the mass flow of liquid ammonia to each evaporator 32 is higher than the capacity of the evaporator 32, such that the ammonia is only partly evaporated and the vapor quality X in the return conduit portion 38a is below 100%.

The evaporator capacity is not constant, but dependent on the vapor quality X. As more of the ammonia refrigerant is evaporated, less of the inner surface of the walls of the evaporator tubes 34 will be in contact with liquid ammonia. The heat transfer from the refrigerant to "dry" tube walls, however, is significantly less than the heat transfer to tube walls in contact with a liquid film 42 as shown e.g. in Fig. 2a - 2c. Therefore, the evaporator capacity decreases for low circulation rates N, corresponding to high values of the vapor quality X.

Generally, pump overfeed systems such as the cooling system 10 of Fig. 1 are designed with a circulation rate of 3-4, i.e. the mass flow rate of liquid ammonia through the valves 36 is 3 - 4 times higher than the amount needed for the design capacity of the evaporator 32 to compensate for load variations. However, this leads to systems with a high total amount of ammonia refrigerant. Due to safety concerns, it would be desirable to reduce the amount of ammonia within the system.

The amount of ammonia may be reduced if the flow rate N is reduced below the usual value of 3.

The cooling system 10 includes the controller 80 to control the mass flow of ammonia supplied to the evaporators 32, and thereby the flow rate N, aiming to obtain a flow rate of less than 3, however being able to react to load variations.

Control is effected based on the sensor signal S indicative of the vapor quality value X of the partly evaporated ammonia refrigerant in the return line 38a.

Fig. 10 shows in an example how the evaporator capacity $C_E$ and the sensor signal S vary depending on the circulation rate N.

Above a certain first threshold value $N_{T1}$ of the circulation rate N, which in the example is at about $N_{T1}$ =2, the evaporator capacity $C_E$ remains essentially constant. If the circulation rate N decreases, the evaporator capacity $C_E$ actually increases slightly. At a lower threshold value $N_{TL}$, in the example at about $N_{TL}$ =1.25, the evaporator capacity $C_E$ decreases.

Operating an un-regulated system within a control range R defined between the lower threshold values $N_{TL}$ and an upper threshold of e.g. $N_{TH}$ = 2 in the present case may not leave sufficient capacity to cover for load variations. However, by using an active circulation rate control, the operating range can be extended into the control range R, while retaining the possibility to increase the circulation rate N in case of increased load. By actively controlling the mass flow of refrigerant into the evaporator 32, the circulation rate N can be kept constant. This allows for a low total charge of ammonia refrigerant in the system. The refrigerant mass flow can be controlled by the controllable evaporator inlet valves 36 when the evaporator load increases. By doing this, it is possible to keep the circulation rate N constant.

Such active circulation rate control is effected by the controller 80 based on the sensor signal S.

The controller 80 regulates the mass flow rate of ammonia refrigerant to each of the evaporators 32 by controlling the control valves 36 accordingly.

In a preferred control strategy, the evaporators 32 of the cooling system 10 may e.g. be operated at an operating point P indicated in Fig. 10 within the control range R (1.25 < N < 2). Within the control range R, the vapor quality value X will be below 80%. For an even lower circulation rate N outside of the control range R, the vapor quality value X will be above 80%.

For example, an operating point P may be chosen at a circulation rate N of 1.3, so that the vapor quality value X at the operating point P will be at about 77%. During setup of the cooling system 10 and the controller 80, a reference sensor signal level $S_P$ may be obtained indicative of the operating point P.

For each of the evaporators 32 in the cooling system 10, the controller 80 will observe the sensor signal S delivered from each of the sensors 40. If the sensor signal S is above $S_P$, the controller 80 will adjust the control signal C to reduce opening of the valve 36 to thereby reduce the flow rate. If the sensor signal S is below $S_P$, the controller 80 will adjust the control signal C to increase opening of the valve 36 to increase the flow rate.

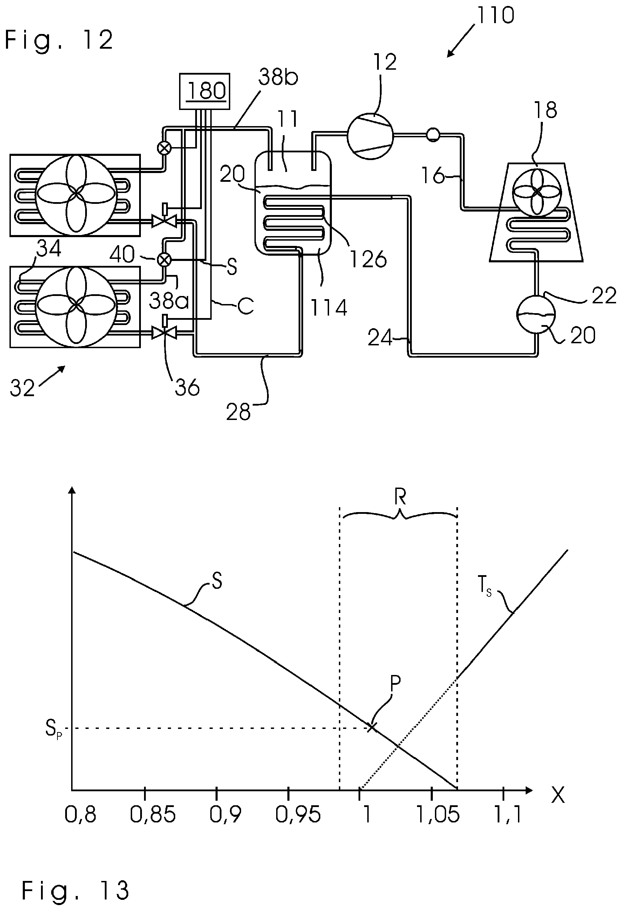

A second embodiment of an ammonia cooling system 110 is shown schematically in Fig. 12. The cooling system 110 according to the second embodiment corresponds in many parts to the cooling system 10 according the first embodiment (Fig. 1). Like parts are designated by like reference numerals. In the following, the differences will be further explained.

The cooling system 110 according to the second embodiment is a direct expansion (DX) cooling system. In the direct expansion cooling system 110 the refrigerant is fully evaporated and not only in part as in the pump over-feed cooling system 10 according to the first embodiment.

The cooling system 110 comprises a compressor 12 to compress ammonia gas 11 contained in the upper portion of a suction accumulator 114 filled with gaseous ammonia 11 and a rest of liquid ammonia 20. The compressed ammonia gas 11 is supplied through a conduit 16 to a condenser 18, where it condenses at least partly to collect as liquid ammonia 20 in a collector 22. The liquid ammonia 20 is supplied through a conduit 24 to the evaporator(s) 32. The conduit 24 comprises a heating spiral 126 in the accumulator 114 for the heated refrigerant to aid in evaporating liquid ammonia 20 there.

The liquid ammonia from the conduit 28 is supplied to each of the evaporators 32 through a controllable expansion valve 36. The evaporators 32 are connected in parallel. As the skilled person understands, the system 110 with two evaporators 32 is only an example. In the following, only one of the evaporators 32 will be further described.

In the evaporator 32 the ammonia refrigerant flowing through evaporator tubes 34 is fully evaporated. The ammonia gas is conducted through first return conduit portions 38a separate for each evaporator 32, merging at a second return conduit portion 38b to be fed into the accumulator 114.

The cooling system 110 comprises sensors 40 in the first return conduit portions 38a supplying a sensor signal S indicative of the vapor quality X to a controller 180. The sensors 30 are radar/microwave sensors as explained above, generating a sensor signal S based on the propagation speed c of an electromagnetic wave. The controller 180 generates a control signal C to control the degree of opening of the evaporator inlet valves 36.

To ensure complete evaporation, the evaporators 32 are designed and operated to superheat the ammonia refrigerant. The term "superheat" here refers to a positive temperature difference by which the gas temperature of the ammonia gas is above the saturation temperature. Superheat is obtained e.g. by increasing the evaporator surface, or the temperature difference, or both, having a negative effect on operation and/or installation cost.

As a consequence, it is desirable to operate the cooling system 110 with a reduced amount of superheat while ensuring complete or near complete evaporation.

The cooling system 110 is operated by the controller 180 to reduce the amount of superheat, even allowing to extend the control range into the two-phase region. Since this may entail an amount of liquid droplets to be carried through the return conduits 38a, 38b with the gas, the suction accumulator 114 is provided with the heating spiral 126 through which the hot condensate is conducted, such that any liquid ammonia 20 accumulated there will be evaporated.

Operation and control of the ammonia direct expansion cooling system 110 of Fig. 12 will be explained with reference to Fig. 13. In Fig. 13, the sensor signal S and a superheat value Ts are shown in dependence on the vapor quality value X. Since the cooling system 110 is operated in the superheat range near a vapor quality of X=1, only high vapor quality values of 0.8 - 1.1 are shown on the x-axis of Fig. 13.

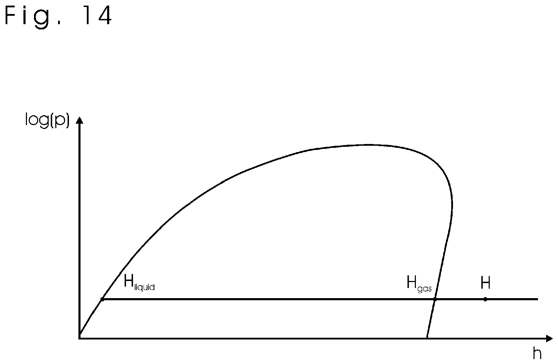

As the skilled person knows, while the vapor quality value X is only well defined up to 100%, it is possible to continue the x-axis to values of X above 100%. This is illustrated in Fig. 14, which shows a simplified pressure enthalpy diagram for the ammonia refrigerant. On a curve of constant pressure $H_{liquid}$ designates the enthalpy of the saturated liquid, and $H_{gas}$ designates the enthalpy of saturated vapor (gas). The vapor quality X for the refrigerant at the constant pressure with an enthalpy H may be expressed as

$$X = (H - H_{liquid})/(H_{gas} - H_{liquid}),$$

wherein X is the vapor quality, H is the enthalpy and $H_{liquid} \leq H \leq H_{gas}$.

The artificial vapor quality $X_{extended}$ for an enthalpy H in the superheat region as illustrated in Fig. 14 may then be expressed as

$$X_{extended} = (H - H_{liquid})/(H_{gas} - H_{liquid}).$$

The sensor signal S as shown decreases almost linearly with increasing vapor quality X up to a value of X=1.02. An amount of superheat Ts increases linearly from X=1.

While unregulated direct expansion cooling systems are operated with a relative high superheat, the cooling system 110 is operated by the controller 80 in a region of low superheat, extending down up to the two-phase region below X=i. In the example shown, a control range R maybe e.g. 0.93 < X < 1.02.

While the amount of superheat may be determined by measuring the temperature of the evaporated refrigerant, such a temperature measurement proves difficult in the low superheat region, e.g. X < 1.02. In this region, there will still be a certain amount of liquid drops contained within the flow of evaporated refrigerant. A temperature sensor provided at the return conduit 38a however will show very different temperature readings depending on whether at the point of contact between the sensor and the ammonia flow the ammonia is in liquid (e.g. droplet) or in gas phase. For this reason, a temperature reading may not reliably be used for control of the cooling system 110 in the control range R.

However, as shown in Fig. 13, the sensor signal S still provides information about the vapor quality X even in the control range R.

Thus, an operating point P may be chosen which may be e.g. at or near X=i. The controller 180 controls the cooling system 110 depending on the sensor signal S. If the sensor signal S is above a reference sensor signal $S_P$, i.e. if the vapor quality value X is below the operating point P, the controller 180 will provide a control signal C to decrease opening of the evaporator inlet valve 36 to increase the amount of superheat. If the sensor signal S is below the operating point sensor signal $S_P$, i.e. the vapor quality value X is above the operating point P, the controller 180 will provide a control signal C to increase opening of the evaporator inlet valve 36, reducing the amount of superheat.

It should be kept in mind that the above embodiments are merely examples of the cooling systems, sensors, operating methods, and sensing methods according to the invention. The invention is not limited to the disclosed embodiments.

For example, the control strategy and parameters, in particular the specific values of the control range R are given as examples only. The sensor design may differ, and the sensor may e.g. be applied in a different position within the cooling system, such as e.g. to one of the evaporator tubes 34. The cooling system design may differ, such as e.g. by omitting an accumulator 126 in the direct expansion cooling system 110 or by providing an accumulator 114 without a heating tube 126. The skilled person will recognize further possible modifications to

**Claims**

1. Device for providing a sensor signal (S) indicative of a vapor quality (X) of a medium flowing within a conduit (60), comprising

   - an electromagnetic wave emitter and receiver (50) coupled to an electromagnetic wave guide (48) arranged within said conduit (60), wherein a wave reflector (52) is arranged to reflect said electromagnetic wave from said emitter to be received by said receiver,
   - timing means to measure a travel time (T) of an electromagnetic wave along said waveguide,
   - and processing means to determine a sensor signal (S) based on said measured travel time (T) and a known distance (L) of said reflector from said emitter and receiver along said wave guide (48).

2. Device according to claim 1, wherein

   - said wave reflector (52) comprises at least a first reflector portion (54) arranged near a center of said conduit (60),
   - and a flow opening (58) arranged between a wall of said conduit (60) and said first reflector portion (54).

3. Device according to claim 2, wherein

   - said flow opening (58) is ring shaped to surround said first reflector portion (54).

4. Device according to claim 2 or 3, wherein

   - said wave reflector (52) further comprises a second reflector portion (56) arranged adjacent to a wall of said conduit (60).

5. Device according to one of the above claims, comprising

   - a flow modification element (56) provided within said conduit (60), said flow modification element (56) being disposed to direct fluid flowing along a wall of said conduit (60) towards a center portion thereof.

6. Device according to one of the above claims, wherein

   - said conduit (60) comprises a venturi portion (74).

7. Device according to one of the above claims, wherein

   - said wave emitter is disposed to generate an electromagnetic wave of a frequency of 1.5 - 26 GHz.

8. Cooling system, comprising

   - at least one evaporator (32) for evaporating an ammonia refrigerant (20), at least one compressor (12) arranged to compress said evaporated refrigerant (11), and at least one condenser (18) for condensing said compressed refrigerant (11),
   - wherein a device (40, 140) according to one of the above claims is arranged at a conduit (38a) between at least a portion of said evaporator (32) and said compressor (12).

9. Cooling system according to claim 8, further comprising

   - a controllable evaporator inlet valve (36) connected to an inlet of said evaporator (32),
   - and controller means (80,180) disposed to control said evaporator inlet valve (36) depending on said sensor signal (S).

10. Cooling system according to claim 9, wherein

    - said controller (80, 180) is configured to reduce an opening of said evaporator inlet valve (36) in response to a sensor signal (S) indicative of a reducing vapor quality value (X), and to increase opening of said evaporator inlet valve (36) in response to a sensor signal (S) indicative of a rising vapor quality value (X).

11. Cooling system according to one of claims 9, 10, wherein

    - an accumulator (14) for said refrigerant (20) in liquid phase is provided,
    - and an evaporator pump (30) is provided for pumping refrigerant (20) from said accumulator (14) to said evaporator (32),
    - said controller (80) being configured to control said evaporator inlet valve (36) to obtain a vapor quality value of 95% or less.

12. Cooling system according to one of claims 9, 10 wherein

    - said system (110) is configured as a direct expansion system,
    - said controller (180) being configured to control said evaporator inlet valve (36) to obtain a vapor quality value of 95% or more.

**13.** Method of providing a sensor signal (S) indicative of a vapor quality (X) of a medium flowing within a conduit (60), comprising

- generating an electromagnetic wave along a wave guide (48) though said conduit (60),
- determining a travel time (T) of said electromagnetic wave,
- and delivering a sensor signal (S) vapor quality signal based on said measured travel time (T) and a known distance (L) of said reflector from said emitter and receiver along said wave guide (48).

**14.** Method of operating a cooling system (10, 110), said system (10, 110) including at least one evaporator (32) for evaporating an ammonia refrigerant, at least one compressor (12) arranged to compress said evaporated refrigerant, and at least one condenser (18) for condensing said compressed refrigerant, said method including

- providing a sensor signal (S) indicative of a vapor quality (X) of said refrigerant in a conduit (38) between at least a portion of said evaporator (32) and said compressor (12) by a method according to claim 13.

Fig. 1

Fig. 2a

Fig. 2b

Fig. 2c

Fig. 3

Fig. 4

Fig. 5

Fig. 6

54

56

52

58

Fig. 7

48

60

72

52

56

70

66    58    54

42

Fig. 8

Fig. 9

Fig. 10

Fig. 11

Fig. 12

Fig. 13

Fig. 14

Europäisches
Patentamt

European
Patent Office

Office européen
des brevets

# EUROPEAN SEARCH REPORT

Application Number

EP 18 20 9029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 069 070 A (SCHMITZ GUENTER [DE]) 3 December 1991 (1991-12-03) * column 3, lines 35-58; figure 2 * ----- | 1-7 | INV. G01N22/00 F25B49/00 G01R27/26 |
| X | EP 2 012 098 A1 (SICK AG [DE]) 7 January 2009 (2009-01-07) * paragraphs [0025] - [0038]; figures 1-4 * ----- | 1-7 | |
| A | US 4 769 593 A (REED PHILIP W [US] ET AL) 6 September 1988 (1988-09-06) * column 3, lines 28-49; figure 2 * ----- | 1-6,13 | |
| A | US 5 841 289 A (YANKIELUN NORBERT E [US] ET AL) 24 November 1998 (1998-11-24) * column 2, line 61 - column 3, line 8; figure 1 * ----- | 1-6 | |
| A | US 5 842 356 A (PFISTER DENNIS M [US] ET AL) 1 December 1998 (1998-12-01) * abstract; figure 4 * ----- | 8-12,14 | TECHNICAL FIELDS SEARCHED (IPC) G01N G01R G01F F25B |

The present search report has been drawn up for all claims

| Place of search | Date of completion of the search | Examiner |
|---|---|---|
| The Hague | 6 May 2019 | Wilhelm-Shalganov, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 3 660 494 A1**

## ANNEX TO THE EUROPEAN SEARCH REPORT
## ON EUROPEAN PATENT APPLICATION NO.

EP 18 20 9029

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2019

| Patent document cited in search report | | Publication date | Patent family member(s) | | | Publication date |
|---|---|---|---|---|---|---|
| US 5069070 | A | 03-12-1991 | BR | 8906092 | A | 31-07-1990 |
| | | | DE | 3841471 | A1 | 13-06-1990 |
| | | | EP | 0377791 | A1 | 18-07-1990 |
| | | | JP | H02201146 | A | 09-08-1990 |
| | | | US | 5069070 | A | 03-12-1991 |
| EP 2012098 | A1 | 07-01-2009 | DE | 102007030847 | A1 | 15-01-2009 |
| | | | DE | 202008018156 | U1 | 22-12-2011 |
| | | | EP | 2012098 | A1 | 07-01-2009 |
| US 4769593 | A | 06-09-1988 | CA | 1274585 | A | 25-09-1990 |
| | | | US | 4769593 | A | 06-09-1988 |
| US 5841289 | A | 24-11-1998 | NONE | | | |
| US 5842356 | A | 01-12-1998 | AU | 741777 | B2 | 06-12-2001 |
| | | | CA | 2284908 | A1 | 24-09-1998 |
| | | | DE | 69801274 | T2 | 27-06-2002 |
| | | | EP | 0970333 | A1 | 12-01-2000 |
| | | | EP | 1085278 | A2 | 21-03-2001 |
| | | | EP | 1085279 | A2 | 21-03-2001 |
| | | | JP | 2001516437 | A | 25-09-2001 |
| | | | US | 5842356 | A | 01-12-1998 |
| | | | US | 6038883 | A | 21-03-2000 |
| | | | WO | 9841801 | A1 | 24-09-1998 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5729123 A